# EUROPEAN PATENT APPLICATION

(11) **EP 4 446 382 A1**
(43) Date of publication of application: **16.10.2024**
(21) Application number: 22915172.5
(22) Date of filing: 30.12.2022
(51) Int. Cl.: C08L 75/16, C09J 175/16

(54) **RESIN COMPOSITION AND USE THEREOF**

(30) Priority: 31.12.2021 CN 202111676523
(71) Applicant: Huawei Technologies Co., Ltd., Shenzhen, Guangdong 518129 (CN)
(72) Inventor: CHUANG, Min Chao, Shenzhen, Guangdong 518129 (CN); ZOU, Hailiang, Shenzhen, Guangdong 518129 (CN); CHEN, Guiyun, Shenzhen, Guangdong 518129 (CN); LIU, Tao, Shenzhen, Guangdong 518129 (CN)
(74) Representative: Pfenning, Meinig & Partner mbB
(86) International application number: PCT/CN2022/143867
(87) International publication number: WO 2023/125923

(57) **Abstract**

Embodiments of this application provide a resin composition and an application thereof. The resin composition includes a polyurethane acrylate and a curing monomer, the curing monomer includes a compound containing a free radical polymerizable group and/or a compound containing a moisture curable group, and a weight-average molecular weight of the curing monomer is greater than or equal to 300. The resin composition has low VOC content before and after the resin composition is cured, has a low allergy risk, and has good bonding effect. The resin composition may be used as an adhesive in a wearable device such as a headset, to implement reliable fastening and bonding, and resolve a human allergy problem caused by the adhesive in a conventional technology to some extent.

## Description

This application claims priority to Chinese Patent Application No. 202111676523.4, filed with the China National Intellectual Property Administration on December 31, 2021 and entitled "RESIN COMPOSITION AND APPLICATION THEREOF", which is incorporated herein by reference in its entirety.

### TECHNICAL FIELD

Embodiments of this application relate to the field of resin composition preparation technologies, and in particular, to a resin composition and an application thereof.

### BACKGROUND

Currently, wearable devices are widely popular in the market. Because most wearable devices are in direct contact with human skin when worn, there may be some human allergy risks. TWS (True Wireless Stereo) Bluetooth headsets are used as an example. As shipments and popularity of the TWS headsets increase, there may be some accidents that users suffer from skin allergies caused by the TWS headsets in the market, and some users even suffer from symptoms such as ear suppuration and scabbing. A main cause of these allergy accidents is that in-ear parts of the headsets contain acrylic ester. The acrylic ester mainly comes from a UV curing adhesive or UV moisture curing adhesive used for assembling and fastening elements of the TWS headset. Basic raw materials of these adhesives include an oligomer, an active monomer, a photoinitiator, and the like. The oligomer has an unsaturated double bond group, and is used as a main bonding material. The active monomer is small in molecular weight and is low in viscosity; not only has good dilutability, but also participates in reaction; and may increase crosslinking of an adhesive. The photoinitiator, as an optical energy absorption carrier, generates active fragments such as free radicals, cations, and anions that can trigger polymerization of the oligomer and the monomer. However, in actual application, some active monomers are usually unable to completely react and cure, and these active monomers are small in molecular weight and are volatile to a specific extent, causing the human allergy risk.

### SUMMARY

In view of this, embodiments of this application provide a resin composition and an application thereof. The resin composition has low VOC (Volatile Organic Compound, volatile organic compound) content before and after the resin composition is cured, and has good bonding effect. The resin composition may be used as an adhesive in a wearable device such as a headset, to implement reliable fastening and bonding, and resolve a human allergy problem caused by the adhesive in a conventional technology to some extent.

Specifically, a first aspect of embodiments of this application provides a resin composition. The resin composition includes a polyurethane acrylate and a curing monomer, the curing monomer includes a compound containing a free radical polymerizable group and/or a compound containing a moisture curable group, and a weight-average molecular weight of the curing monomer is greater than or equal to 300.

According to the resin composition provided in the first aspect of embodiment of this application, a curing monomer whose molecular weight is greater than or equal to 300 is selected, so that volatility before and after the resin composition is cured can be reduced, and an allergy risk of the resin composition to human skin can be reduced. Therefore, when the resin composition is used as an adhesive in a device such as a headset, reliable fastening and bonding can be implemented, and a human allergy problem caused by the adhesive in a conventional technology can be resolved to some extent. In some embodiments of this application, the resin composition includes the curing monomer containing the free radical polymerizable group and the moisture curable group, so that the resin composition has both a UV light curing characteristic and a moisture curing characteristic, thereby obtaining better curing effect.

In an implementation of this application, the curing monomer may include one or more compounds, and a weight-average molecular weight of each component, namely, each compound, of the curing monomer is greater than or equal to 300. In some implementations of this application, a weight-average molecular weight of the curing monomer is greater than or equal to 500. It is more difficult to penetrate into skin when the molecular weight is greater than or equal to 500, so that an allergy risk caused by contact with human skin can be better reduced, and a user allergy problem can be better resolved. In some implementations of this application, the weight-average molecular weight of the curing monomer may be 500-1000. A curing monomer with a suitable molecular weight is selected, and the viscosity of the resin composition can be controlled as much as possible under a condition that an allergy risk is effectively reduced, so that the curing monomer can play a dilution role to some extent.

In an implementation of this application, a weight-average molecular weight of the polyurethane acrylate may be greater than or equal to 500 and less than or equal to 5000. If the polyurethane acrylate whose weight-average molecular weight is greater than or equal to 500 is selected, it is helpful to reduce the allergy risk of the resin composition to human skin. However, if the polyurethane acrylate whose weight-average molecular weight is less than or equal to 5000 is selected, properties such as overall viscosity of the resin composition can be better controlled, thereby lowering a requirement for dilution of a low-molecular-weight curing monomer, and better adapting to a resin system in which the weight-average molecular weight of the curing monomer is greater than or equal to 300 in this application.

In an implementation of this application, VOC content before and after the resin composition is cured is less than 20 mg/g. A VOC is a volatile organic compound (Volatile Organic Compound), and has great impact on human health. The World Health Organization (WHO) refers to a volatile organic compound whose melting point is below a room temperature and boiling point is between 50-260°C as a VOC. In this application, the VOC content before and after the resin composition is cured is low, is more environmentally friendly, is conducive to human health, and reduces a human allergy risk.

In an implementation of this application, weight content of a non-volatile substance before and after the resin composition is cured is greater than or equal to 98.5%. Higher weight content of the non-volatile substance means lower weight content of a volatile substance and lower VOC content. Therefore, this is conducive to human health and reduces a human allergy risk.

In an implementation of this application, in the resin composition, mass proportions of the polyurethane acrylate and the curing monomer are respectively 50%-90% and 10%-50%.

In an implementation of this application, the resin composition further includes a photoinitiator. In an implementation of this application, in the resin composition, a mass proportion of the photoinitiator is 0.5%-5%.

The polyurethane acrylate is a prepolymer, and is a main bonding material, which ensures bonding performance of the resin composition. The curing monomer has reaction activity, and can react, thereby increasing crosslinking of the resin composition. The photoinitiator, as an optical energy absorption carrier, may generate active fragments that can trigger polymerization of the polyurethane acrylate and the curing monomer. Each component of the resin composition is controlled within the foregoing mass proportion range, so that better curing effect and better bonding effect can be obtained.

In an implementation of this application, the curing monomer includes the compound containing the free radical polymerizable group and/or the compound containing the moisture curable group. In some implementations of this application, the curing monomer includes the compound containing the free radical polymerizable group, and the compound does not contain the moisture curable group. In some other implementations of this application, the curing monomer includes the compound containing the moisture curable group, and the compound does not contain the free radical polymerizable group. In some other implementations of this application, the curing monomer includes both the compound containing the free radical polymerizable group and the compound containing the moisture curable group, and the resin composition includes the curing monomer containing the free radical polymerizable group and the moisture curable group. In this implementation, the compound containing the free radical polymerizable group and the compound containing the moisture curable group may be a same compound. In other words, the compound is a compound containing both the free radical polymerizable group and the moisture curable group, that is, the free radical polymerizable group and the moisture curable group are provided by the same compound. Alternatively, the compound containing the free radical polymerizable group and the compound containing the moisture curable group may be different compounds, and the compound containing the free radical polymerizable group contains only a compound of the free radical polymerizable group, and does not contain the moisture curable group. The compound containing the moisture curable group contains only a compound of the moisture curable group, and does not contain the free radical polymerizable group. In other words, the free radical polymerizable group and the moisture curable group are provided by different compounds. The free radical polymerizable group may undergo a reaction under UV light, so that the resin composition is cured; and the moisture curable group may react with water vapor, so that the resin composition is cured.

In an implementation of this application, the free radical polymerizable group may be an unsaturated double bond. In an implementation of this application, the moisture curable group may include one or more of an isocyanate-terminated group and an alkoxysilyl group. Both the isocyanate-terminated group and the alkoxysilyl group can react with moisture in air for moisture curing. In some implementations of this application, the curing monomer includes the compound containing the free radical polymerizable group and/or a compound containing the isocyanate-terminated group. In some other implementations of this application, the curing monomer includes the compound containing the free radical polymerizable group and/or a compound containing the alkoxysilyl group. In some implementations of this application, the curing monomer includes a compound containing both the free radical polymerizable group and the isocyanate-terminated group. In some other implementations of this application, the curing monomer includes a compound containing both the free radical polymerizable group and the alkoxysilyl group.

An existing UV light curing adhesive may be cured under ultraviolet light. However, in actual application, a shadow part that is not illuminated by the ultraviolet light cannot be cured, and consequently a mechanical property of the cured adhesive is greatly reduced. When the curing monomer in the resin composition in this embodiment of this application has both the free radical polymerizable group capable of UV light curing and the moisture curable group capable of moisture curing with water vapor, the resin can have a double curing function of both UV light curing and moisture curing. In other words, the resin composition in this application can be cured quickly under light, and be cured by moisture in air in an unexposed place. After UV curing, the monomer can still be continuously cured by moisture, thereby improving a curing rate and resolving a problem that the shadow part cannot be cured in a light polymerization process. The resin composition has a UV light-moisture double curing characteristic, which can ensure that the resin composition is more completely cured, and improve bonding effect of the resin composition. Especially for a bonding structure that cannot be completely irradiated by light, the curing bonding effect is improved more significantly.

In an implementation of this application, a functionality of an isocyanate of the compound containing the free radical polymerizable group and the isocyanate-terminated group is greater than or equal to 2. If the functionality of the isocyanate is greater, curing can be better completed through reaction of an isocyanate group and water.

In an implementation of this application, the curing monomer includes a compound represented by the following formula (1):

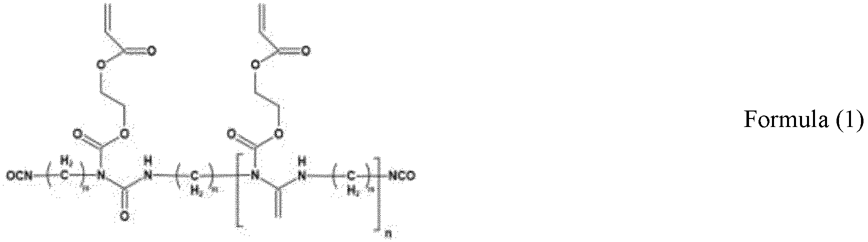

In the formula (1), m and n are positive integers. Specifically, m may be an integer 2-20, and n may be an integer greater than or equal to 1. For example, n may be 1, 2, 3, 4, 5, 6, 7, 8, 9, 10, or the like.

In another implementation of this application, the curing monomer includes a compound represented by the following formula (2):

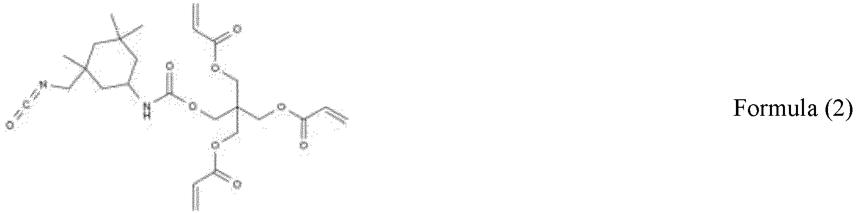

In an implementation of this application, the photoinitiator may be various compounds that can absorb energy of a specific wavelength in an ultraviolet light region (250-420 nm) to generate active fragments (such as free radicals, cations, and anions) and therefore trigger polymerization, crosslinking, and curing of monomers. The photoinitiator may enable curing monomers to implement fast crosslinking and curing under light. In this embodiment of this application, the photoinitiator may be specifically one or more of an α-hydroxy ketone photoinitiator, an acylphosphine oxide photoinitiator, a benzyl formate photoinitiator, a benzil photoinitiator, a benzophenone photoinitiator, and an oxime ester photoinitiator.

In an implementation of this application, the resin composition further includes a thiol. Addition of the thiol can improve curing performance of the resin composition. Specifically, as a free radical chain transfer agent, addition of the thiol can improve sensitivity of the resin composition, increase deep curing, and further improve curing performance of a part of a low-light region. In an implementation of this application, in the resin composition, a mass proportion of the thiol is less than or equal to 3%. The addition of the thiol is controlled to be 3% or less, so that the curing performance of the resin composition can be improved and the resin composition storage is not unstable due to excessive content of the thiol.

In an implementation of this application, the thiol may include one or more of pentaerythritol tetrakis(3-mercaptobutyric acid) ester (CAS No. 31775-89-0), pentaerythritol tetrakis(3-mercaptopropionic acid) ester (CAS No. 7575-23-7), tris[2-(3-mercaptopropionyloxy)ethyl] isocyanurate (CAS No. 36196-44-8), and trimethylolpropane tris(3-mercaptopropionic acid ester) (CAS No. 33007-83-9).

In an implementation of this application, the polyurethane acrylate may be prepared in the following manner:
under a condition that a catalyst and an antioxidant exist, mixing a polyol and an isocyanate ethyl acrylate monomer, and mixing and reacting for 4-12 hours at 40-100°C, to obtain the polyurethane acrylate.

A prepolymer material of the polyurethane acrylate is prepared by using the foregoing method, and a polyurethane prepolymer having a lower molecular weight and narrow molecular weight distribution may be synthesized by using a one-step method, thereby reducing a process and improving production efficiency.

In an implementation of this application, the polyol may be a polyol substance in various forms, for example, may be one or more of a polyester polyol, a polycarbonate polyol, a polyether polyol, a polytetramethylene ether glycol, a polycaprolactone polyol, or a copolymer of the foregoing polyols. A molecular weight of the polyurethane acrylate can be controlled at a lower level by selecting a molecular weight of the polyol.

In an implementation of this application, the catalyst may be one or more of an organic bismuth compound, an organic zinc compound, and an organic titanium compound.

In an implementation of this application, the antioxidant may include an alkylphenol antioxidant, and the alkylphenol antioxidant is specifically, for example, one or more of 2,6-di-tert-butyl-p-methylphenol (BHT), 2,4-di-tert-butylphenol, and o-tert-butylphenol (that is, 2-tert-butylphenol).

In an implementation of this application, a shear strength of the resin composition is greater than or equal to 1 Mpa.

A second aspect of this application provides a method for preparing a resin composition, including the following steps:
mixing a polyurethane acrylate and a curing monomer to obtain the resin composition, where the curing monomer includes a compound containing a free radical polymerizable group and/or a compound containing a moisture curable group, and a weight-average molecular weight of the curing monomer is greater than or equal to 300.

A third aspect of embodiments of this application provides an adhesive. The adhesive includes the resin composition according to the first aspect of embodiments of this application.

A fourth aspect of embodiments of this application provides a resin curing product. The resin curing product is obtained by curing the resin composition according to the first aspect of embodiments of this application. In an implementation of this application, the curing includes ultraviolet light curing and/or moisture curing.

A fifth aspect of embodiments of this application provides a bonding structure. The bonding structure includes a first bonding member, a second bonding member, and a bonding part disposed between the first bonding member and the second bonding member, and the bonding part includes a curing product obtained by curing the resin composition according to the first aspect of embodiments of this application or the adhesive according to the third aspect, or includes the resin curing product according to the fourth aspect of embodiments of this application. The first bonding member and the second bonding member may be any functional element that needs to be bonded and fastened together.

In an implementation of this application, the first bonding member may be made of plastic, metal, glass, or the like, and the second bonding member may be made of plastic, metal, glass, or the like.

This application further provides a device. The device includes the bonding structure according to the fifth aspect of embodiments of this application. The device may be any one of various electronic devices, or another device on which the bonding structure needs to be disposed. The electronic device may specifically include a wearable device (for example, a headset, glasses, a watch, a wristband, a wrist strap, a helmet, or a headband), a mobile phone, a tablet computer, a notebook computer, a laptop computer, an ultra-mobile personal computer (UMPC), a handheld computer, an intercom, a netbook, a POS machine, a personal digital assistant (PDA), an automobile data recorder, a virtual reality device, a wireless USB flash drive, a Bluetooth stereo, an in-vehicle product, or the like. A resin composition in embodiments of this application is used as an adhesive to form a bonding structure. The resin composition has a UV light-moisture double curing characteristic, good curing bonding effect, low volatility, and a low allergy risk, so that product competitiveness of the electronic device can be improved.

In some implementations of this application, the device is a wearable device.

Embodiments of this application further provide an application of a resin composition in an electronic device. The application is specifically that the resin composition is used as an adhesive in the electronic device.

An embodiment of this application further provides a wearable device. The wearable device includes a housing and an element fastened to the housing by using an adhesive, and the adhesive includes the adhesive according to the third aspect of embodiments of this application.

### BRIEF DESCRIPTION OF DRAWINGS

FIG. 1 is a diagram of a bonding structure according to an embodiment of this application;
FIG. 2 is a diagram of a structure of a wearable device according to some embodiments of this application;
FIG. 3 is a diagram of bonding and fastening a wearable device by using a resin composition according to some embodiments of this application;
FIG. 4 is a diagram of setting a sample during a shear strength test of a resin composition according to this application;
FIG. 5 is a representation diagram of an infrared spectrum of a polyurethane A prepared according to Embodiment 1 of this application;
FIG. 6 is a representation diagram of an infrared spectrum of a polyurethane B prepared according to Embodiment 2 of this application; and
FIG. 7 is a representation diagram of an infrared spectrum of a polyurethane C prepared according to Embodiment 3 of this application.

### DESCRIPTION OF EMBODIMENTS

The following describes embodiments of this application with reference to the accompanying drawings in embodiments of this application.

Currently, in a process in which a UV curing adhesive or a UV moisture curing adhesive that is used to fasten a part and that is in a wearable device such as a headset is cured, a component of a low molecular weight cannot be 100% cured. Consequently, when a user wears the wearable device such as the headset, the element of the low molecular weight volatilizes, causing an allergy of the user. To reduce an allergy risk of using the wearable device such as the headset by the user, an embodiment of this application provides a resin composition. VOC content before and after the resin composition is cured is low, and the resin composition may be used as an adhesive in a device such as a headset, to implement reliable fastening and bonding, and effectively resolve a human allergy problem caused by the adhesive.

The resin composition provided in this embodiment of this application includes a polyurethane acrylate and a curing monomer, the curing monomer includes a compound containing a free radical polymerizable group and/or a compound containing a moisture curable group, and a weight-average molecular weight of the curing monomer is greater than or equal to 300.

According to the resin composition provided in this embodiment of this application, a curing monomer whose molecular weight is greater than or equal to 300 is selected, so that volatility before and after the resin composition is cured can be reduced, and an allergy risk of the resin composition to human skin can be reduced. Therefore, when the resin composition is used as an adhesive in a device such as a headset, reliable fastening and bonding can be implemented, and a human allergy problem caused by the adhesive in a conventional technology can be resolved to some extent.

In an implementation of this application, the curing monomer may include one or more compounds, and a weight-average molecular weight of each component, namely, each compound, of the curing monomer is greater than or equal to 300. In some implementations of this application, a weight-average molecular weight of the curing monomer is greater than or equal to 500. According to the 500 Dalton rule, it is more difficult for a compound whose molecular weight is greater than or equal to 500 to penetrate into skin. When the resin composition in this embodiment of this application is used as the adhesive, even if some curing monomers are not completely reacted and cured, a possibility of an allergy risk caused by contact with human skin can be better reduced, thereby better resolving a user allergy problem. In some implementations of this application, the weight-average molecular weight of the curing monomer is 500-1000, and may be specifically, for example, 500, 600, 700, 800, 900, or 1000. A curing monomer with a suitable molecular weight is selected, and viscosity of the resin composition can be controlled as much as possible under a condition that an allergy risk is effectively reduced, so that the curing monomer can play a dilution role to some extent.

In an implementation of this application, a weight-average molecular weight of the polyurethane acrylate is greater than or equal to 500 and less than or equal to 5000. If the polyurethane acrylate whose the weight-average molecular weight is greater than or equal to 500 is selected, it is helpful to reduce the allergy risk of the resin composition to human skin. However, if the polyurethane acrylate whose the weight-average molecular weight is less than or equal to 5000 is selected, properties such as overall viscosity of the resin composition can be better controlled, thereby meeting feasibility of dispensing process processing, lowering a requirement for dilution of a low-molecular-weight curing monomer, and better adapting to a resin system in which the molecular weight of the curing monomer is greater than or equal to 300 in this application. In some embodiments, the weight-average molecular weight of the polyurethane acrylate may be, for example, 500, 1000, 2000, 2500, 2700, 3000, 4000, or 5000. The resin composition in this application may include one or more polyurethane acrylates. In this embodiment of this application, a PDI (polymer dispersity index, polymer dispersity index) of the polyurethane acrylate is less than or equal to 2, that is, the PDI of the polyurethane acrylate is small, and material uniformity is high. This helps improve overall performance uniformity of the resin composition. In this application, a unit of a molecular weight of each substance is a standard unit g/mol.

In an implementation of this application, the VOC content before and after the resin composition is cured is less than 20 mg/g. A VOC is a volatile organic compound (Volatile Organic Compound), and has great impact on human health. The World Health Organization (WHO) refers to a volatile organic compound whose melting point is below a room temperature and boiling point is between 50-260°C as a VOC. In this application, the VOC content before and after the resin composition is cured is low, is more environmentally friendly, is conducive to human health, and reduces a human allergy risk. In some embodiments of this application, the VOC content before and after the resin composition is cured is less than or equal to 18 mg/g. In some embodiments of this application, the VOC content before and after the resin composition is cured is less than or equal to 15mg/g.

In an implementation of this application, weight content of a non-volatile substance before and after the resin composition is cured is greater than or equal to 98.5%. In some embodiments, the weight content of the non-volatile substance before and after the resin composition is cured is greater than or equal to 98.8%. Higher weight content of the non-volatile substance means lower weight content of a volatile substance and lower VOC content. Therefore, this is conducive to human health and reduces a human allergy risk. The weight content of the non-volatile substance before and after the resin composition is cured is greater than or equal to 98.5%, that is, the weight content of the volatile substance is less than or equal to 15 mg/g.

In an implementation of this application, in the resin composition, mass proportions of the polyurethane acrylate, the curing monomer, and a photoinitiator are respectively 50%-90%, 10%-50%, and 0.5%-5%. The polyurethane acrylate is a prepolymer, and is a main bonding material, which ensures bonding performance of the resin composition. The bonding property of the resin composition can be ensured by controlling the mass proportion of the polyurethane acrylate to 50%-90%. The curing monomer has reaction activity, and can react, thereby increasing crosslinking of the resin composition; and the curing monomer has a function of diluting the polyurethane acrylate, and the foregoing function can be better fulfilled when the mass proportion of the curing monomer is controlled to 10%-50%. When viscosity of the polyurethane acrylate is high, a quantity of curing monomers can be increased. The photoinitiator, as an optical absorption carrier, may generate active fragments that can trigger polymerization of the polyurethane acrylate and the curing monomer. Each component of the resin composition is controlled within the foregoing weight range, so that better curing effect and better bonding effect can be obtained. In some embodiments of this application, in the resin composition, the mass proportion of the polyurethane acrylate may be 50%, 60%, 70%, 80%, or 90%; the mass proportion of the curing monomer may be 10%, 20%, 30%, 40%, or 50%; and the mass proportion of the photoinitiator may be 0.5%, 1%, 1.5%, 2%, 3%, 4%, or 5%. In some embodiments, in the resin composition, a mass ratio of the polyurethane acrylate to the curing monomer is 3-6:1. Specifically, the mass ratio is, for example, 3:1, 4:1, 5:1, or 6:1. The mass ratio of the polyurethane acrylate to the curing monomer is controlled in the foregoing range, so that the resin composition can obtain better comprehensive performance.

In an implementation of this application, the curing monomer includes the compound containing the free radical polymerizable group and/or the compound containing the moisture curable group. The free radical polymerizable group may undergo a free radical polymerization reaction under UV light, so that the resin composition is cured; and the moisture curable group may react with water vapor, so that the resin composition is cured. In some other implementations of this application, the curing monomer includes the compound containing the moisture curable group, and the compound does not contain the free radical polymerizable group. In some other implementations of this application, the curing monomer includes both the compound containing the free radical polymerizable group and the compound containing the moisture curable group, and the resin composition includes the curing monomer containing the free radical polymerizable group and the moisture curable group. In this implementation, the compound containing the free radical polymerizable group and the compound containing the moisture curable group may be a same compound. In other words, the compound is a compound containing both the free radical polymerizable group and the moisture curable group, that is, the free radical polymerizable group and the moisture curable group are provided by the same compound. Alternatively, the compound containing the free radical polymerizable group and the compound containing the moisture curable group may be different compounds, and the compound containing the free radical polymerizable group contains only a compound of the free radical polymerizable group, and does not contain the moisture curable group. The compound containing the moisture curable group contains only a compound of the moisture curable group, and does not contain the free radical polymerizable group. In other words, the free radical polymerizable group and the moisture curable group are provided by different compounds. The free radical polymerizable group may undergo a reaction under UV light, so that the resin composition is cured; and the moisture curable group may react with water vapor, so that the resin composition is cured. The resin composition includes the curing monomer containing the free radical polymerizable group and the moisture curable group, so that the resin composition has both a UV light curing characteristic and a moisture curing characteristic, thereby obtaining better curing effect.

In an implementation of this application, the free radical polymerizable group may be an unsaturated double bond. In an implementation of this application, the moisture curable group may include one or more of an isocyanate-terminated group and an alkoxysilyl group. Both the isocyanate-terminated group and the alkoxysilyl group can react with moisture in air for moisture curing. In some implementations of this application, the curing monomer includes the compound containing the free radical polymerizable group and/or a compound containing the isocyanate-terminated group. In some other implementations of this application, the curing monomer includes the compound containing the free radical polymerizable group and/or a compound containing the alkoxysilyl group. In some implementations of this application, the curing monomer includes a compound containing both the free radical polymerizable group and the isocyanate-terminated group. In some other implementations of this application, the curing monomer includes a compound containing both the free radical polymerizable group and the alkoxysilyl group.

An existing UV light curing adhesive may be cured under ultraviolet light. However, in actual application, a shadow part that is not illuminated by the ultraviolet light cannot be cured, and consequently a mechanical property of the cured adhesive is greatly reduced. When a molecular chain of the curing monomer in the resin composition in this embodiment of this application has both the free radical polymerizable group capable of UV light curing and the moisture curable group capable of moisture curing with water vapor, the resin can have a double curing function of both UV light curing and moisture curing. In other words, the resin composition in this application can be cured quickly under light, and be cured by moisture in air in an unexposed place. After UV curing, the monomer can still be continuously cured by moisture, thereby improving a curing rate and resolving a problem that the shadow part cannot be cured in a light polymerization process. The resin composition has a UV light-moisture double curing characteristic, which can ensure that the resin composition is more completely cured, and improve bonding effect of the resin composition. Especially for a bonding structure that cannot be completely irradiated by light, the curing bonding effect is improved more significantly.

A specific chemical structure of the curing monomer in this application is not limited, and may be various specific structures. Specific chemical structures of the compound that contains both the free radical polymerizable group and the isocyanate-terminated group, and the curing monomer that contains both the free radical polymerizable group and the alkoxysilyl group are not limited. In an implementation of this application, a functionality of an isocyanate of the compound containing both the free radical polymerizable group and the isocyanate-terminated group may be greater than or equal to 2. If the functionality of the isocyanate is greater, curing can be better completed through reaction of an isocyanate group and water.

In a specific implementation of this application, the compound containing both the free radical polymerizable group and the isocyanate-terminated group includes a compound represented by the following formula (1):

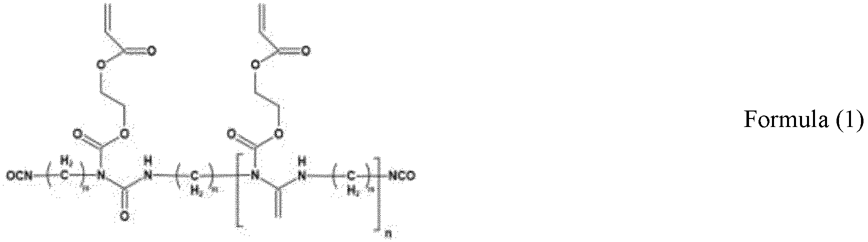

In the formula (1), m and n are positive integers. Specifically, m may be an integer 2-20, and n may be an integer greater than or equal to 1. For example, m may be 2, 3, 4, 5, 6, 7, 8, 9, 10, 11, 12, 13, 14, 15, 16, 17, 18, 19, 20, or the like, and n may be 1, 2, 3, 4, 5, 6, 7, 8, 9, 10, or the like.

In another implementation of this application, the compound containing both the free radical polymerizable group and the isocyanate-terminated group includes a compound represented by the following formula (2):

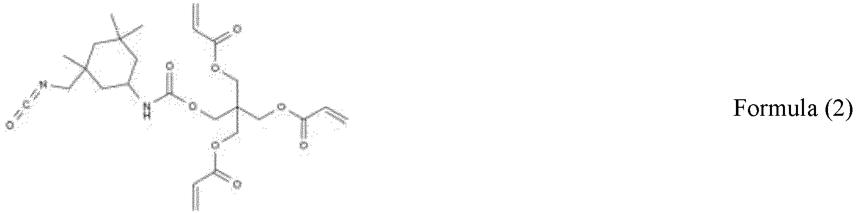

The compound represented by the formula (2) may be formed by reaction of pentaerythritol triacrylate (PETIA) and isofolone diisocyanate (IPDI).

In an implementation of this application, the photoinitiator may be various compounds that can absorb energy of a specific wavelength in an ultraviolet light region (250-420 nm) to generate active fragments (such as free radicals, cations, and anions) and therefore trigger polymerization, crosslinking, and curing of monomers. The photoinitiator may enable curing monomers to implement fast crosslinking and curing under light. The photoinitiator may be a photoinitiator with low oxygen inhibition and high sensitivity. The photoinitiator with low oxygen inhibition can achieve a high reaction rate under lower content of the photoinitiator, thereby improving curing efficiency and curing effect. The resin composition may include one or more photoinitiators. In some embodiments of this application, the photoinitiator may be specifically one or more of an α-hydroxy ketone photoinitiator, an acylphosphine oxide photoinitiator, a benzyl formate photoinitiator, a benzil photoinitiator, a benzophenone photoinitiator, and an oxime ester photoinitiator. In some embodiments, the photoinitiator may include the α-hydroxy ketone photoinitiator and the acylphosphine oxide photoinitiator.

In an implementation of this application, the resin composition further includes a thiol. Addition of the thiol can improve curing performance of the resin composition. Specifically, as a free radical chain transfer agent, addition of the thiol can improve sensitivity of the resin composition, increase deep curing, and further improve curing performance of a part of a low-light region. In an implementation of this application, in the resin composition, a mass proportion of the thiol is less than or equal to 3%. Specifically, the mass proportion of the thiol may be 0.4%-3%, for example, 0.4%, 0.5%, 1%, 1.5%, 2%, 2.5%, or 3%. The addition of the thiol is controlled to be 3% or less, so that the curing performance of the resin composition can be improved and the resin composition storage is not unstable due to excessive content of the thiol.

In an implementation of this application, the resin composition may include one or more types of thiols, and specific selection of the thiol is not limited. The thiol may include one or more of pentaerythritol tetrakis(3-mercaptobutyric acid) ester (CAS No. 31775-89-0), pentaerythritol tetrakis(3-mercaptopropionic acid) ester (CAS No. 7575-23-7), tris[2-(3-mercaptopropionyloxy)ethyl] isocyanurate (CAS No. 36196-44-8), and trimethylolpropane tris(3-mercaptopropionic acid ester) (CAS No. 33007-83-9).

In an implementation of this application, a specific structure of the polyurethane acrylate is not limited. The polyurethane acrylate may be obtained by polymerizing a polyol and an isocyanate ethyl acrylate monomer. The polyurethane acrylate may be specifically prepared in the following manner:
under a condition that a catalyst and an antioxidant exist, mixing a polyol and an isocyanate ethyl acrylate monomer, and mixing and reacting for 4-12 hours at 40-100°C, to obtain the polyurethane acrylate.

A prepolymer material of the polyurethane acrylate is prepared by using the foregoing method, and a polyurethane prepolymer having a lower molecular weight and narrow molecular weight distribution may be synthesized by using a one-step method, thereby reducing a process and improving production efficiency. The preparation of the polyurethane acrylate is not limited to the foregoing method, and any method that can implement the preparation of the polyurethane acrylate may be used.

In an implementation of this application, the polyol may be a polyol substance in various forms, for example, may be one or more of a polyester polyol, a polycarbonate polyol, a polyether polyol, a polytetramethylene ether glycol, a polycaprolactone polyol, or a copolymer of the foregoing polyols. The polyol may be slightly excessively added relative to the isocyanate ethyl acrylate monomer. For example, the polyol may be added at a chemical measurement ratio of a hydroxy group to an isocyanate group of 1.05-1.2: 1. A type of the polyol determines a final molecular structure of the polyurethane acrylate.

In an implementation of this application, the catalyst may be one or more of an organic bismuth compound, an organic zinc compound, and an organic titanium compound. The organic bismuth compound, the organic zinc compound, and the organic titanium compound are environmentally friendly catalysts, and can reduce an allergy risk. The organic bismuth compound is an organic bismuth catalyst, and may be specifically, for example, bismuth isooctanoate, bismuth laurate, bismuth neodecanoate, or the like. The organic zinc compound is an organic zinc catalyst, and may be specifically, for example, dimethyl zinc, diethyl zinc, or the like. The organic titanium compound is an organic titanium catalyst, and may be specifically, for example, titanate. The catalyst may be added 100-300 ppm relative to mass of the isocyanate ethyl acrylate monomer.

In an implementation of this application, the antioxidant may include an alkylphenol antioxidant, and the alkylphenol antioxidant is specifically, for example, one or more of 2,6-di-tert-butyl-p-methylphenol (BHT), 2,4-di-tert-butylphenol, and o-tert-butylphenol (that is, 2-tert-butylphenol). The antioxidant may be added 200-1000 ppm relative to the mass of the isocyanate ethyl acrylate monomer.

In this embodiment of this application, a temperature of a polyurethane acrylate preparation reaction may be specifically 40°C, 50°C, 60°C, 70°C, 80°C, 90°C, 100°C, or the like, and a time period may be 4 hours, 5 hours, 6 hours, 7 hours, 8 hours, 9 hours, 10 hours, 11 hours, 12 hours, or the like.

A shear strength of the resin composition in this embodiment of this application is greater than or equal to 1 Mpa, indicating that the resin composition has good bonding performance. The shear strength is an ultimate strength generated when a material is cut off, which reflects a capability of the material to resist shear and sliding. A value is equal to a tangential stress value on a shear surface, that is, a ratio of a shear force formed on the shear surface to a damage area. A greater shear strength of an adhesive indicates better bonding effect.

This application further provides a method for preparing the foregoing resin composition, including the following steps:
mixing a polyurethane acrylate, a curing monomer, and a photoinitiator to obtain the resin composition, where the curing monomer includes a compound containing a free radical polymerizable group and/or a compound containing a moisture curable group, and a weight-average molecular weight of the curing monomer is greater than or equal to 300.

In some embodiments, a thiol is further added in the mixing process. After the polyurethane acrylate, the curing monomer, the photoinitiator, and the thiol are mixed evenly, defoaming treatment can be further performed.

An embodiment of this application further provides an adhesive. The adhesive includes the foregoing resin composition in embodiments of this application. The adhesive in this embodiment of this application may be used for bonding and fastening various to-be-bonded members. VOC content before and after the adhesive is cured is low, an allergy risk is low, and a bonding binding force is strong. The adhesive may be used in an electronic device such as a wearable device, to improve product competitiveness of the electronic device. When a part of the electronic device is assembled and fastened, the adhesive may be coated on a to-be-bonded surface of the to-be-bonded element, or may be coated in a dispensing manner.

A shear strength of the adhesive in this embodiment of this application is greater than or equal to 1 Mpa, indicating that the adhesive has good bonding performance.

An embodiment of this application further provides a resin curing product, and the resin curing product is obtained by curing the foregoing resin composition in embodiments of this application. In an implementation of this application, the curing may include ultraviolet light curing and/or moisture curing. A light curing condition may be: a UV light wavelength of 365 nm, and irradiation energy of 6000 mj/cm².

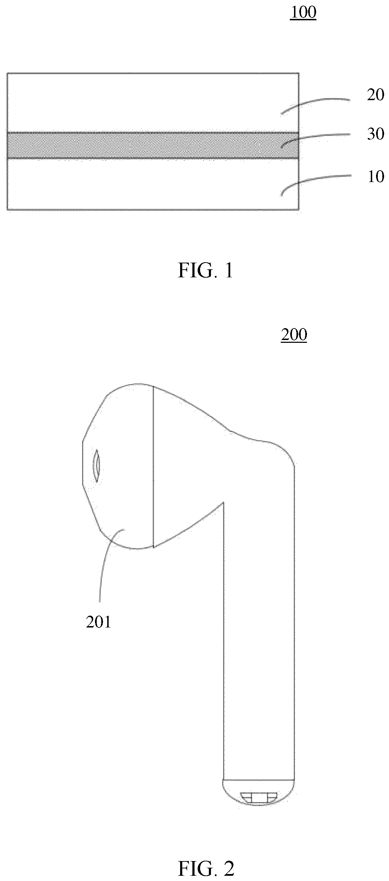

Refer to FIG. 1. An embodiment of this application further provides a bonding structure 100. The bonding structure 100 includes a first bonding member 10, a second bonding member 20, and a bonding part 30 disposed between the first bonding member 10 and the second bonding member 20. The bonding part 30 includes a curing product obtained by curing the foregoing resin composition or adhesive in embodiments of this application. The first bonding member 10 and the second bonding member 20 may be any functional element that needs to be bonded and fastened together, and a specific shape and a specific structure are not limited.

In an implementation of this application, the first bonding member 10 may be made of plastic, metal, glass, or the like, and the second bonding member 20 may also be made of plastic, metal, glass, or the like.

This application further provides a device. The device includes the foregoing bonding structure in embodiments of this application. To be specific, the resin composition provided in embodiments of this application is used for assembling and fastening of an element of the device. The device may be any one of various electronic devices, or another device that needs to be assembled and fastened by using an adhesive and that is provided with the bonding structure. The electronic device may specifically include a wearable device (for example, a headset, glasses, a watch, a wristband, a wrist strap, a helmet, or a headband), a mobile phone, a tablet computer, a notebook computer, a laptop computer, an ultra-mobile personal computer (UMPC), a handheld computer, an intercom, a netbook, a POS machine, a personal digital assistant (PDA), an automobile data recorder, a virtual reality device, a wireless USB flash drive, a Bluetooth stereo, an in-vehicle product, or the like. The resin composition in this embodiment of this application is used as an adhesive to form the bonding structure, so that curing bonding effect is good, volatility is low, and an allergy risk is low, thereby improving product competitiveness of the electronic device and improving user experience in health.

Refer to FIG. 2. In some implementations of this application, the device is a wearable device 200, and the wearable device 200 includes a housing 201 and a functional part disposed inside the housing 201. Specifically, FIG. 2 is a diagram of a structure of the wearable device 200 being a headset. In the wearable device 200, a first bonding member 10 and a second bonding member 20 may be any functional elements that need to be bonded, that is, to be bonded and fastened together. For example, the first bonding member 10 may be a housing of the wearable device, or may be a bearing substrate, a bearing support, or the like, and the second bonding member 20 may be any one of various wearable device elements that need to be fastened to the housing or the bearing substrate/bearing support, for example, a microphone, a sound output net, a light guide, a lining support, or a distance sensor. The resin composition in this application has low volatility. Using the resin composition in this application can reduce an allergy risk when a user wears the wearable device, and improve user experience in wearing health.

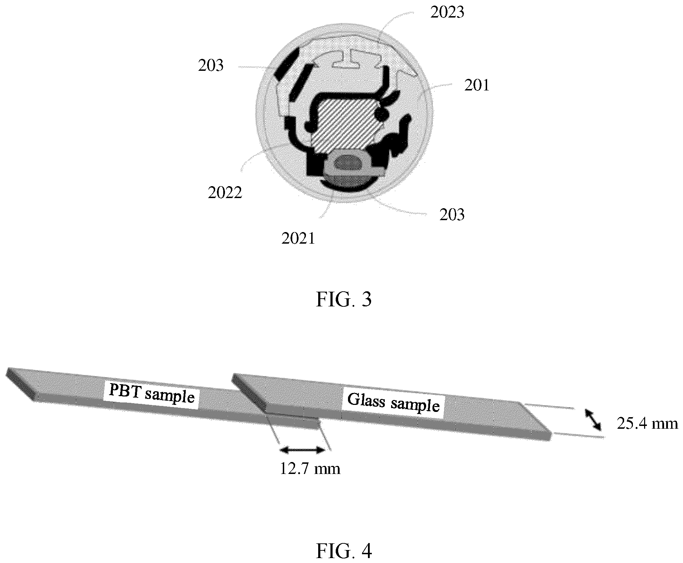

FIG. 3 is a diagram of bonding and fastening the wearable device 200 by using a resin composition according to some embodiments of this application. A plurality of functional parts are disposed inside the housing 201. The functional elements include a sound output net 2021, a light guide 2022, a lining support 2023, and the like. The functional elements are fastened to the housing 201 by using a connection part 203 formed by an adhesive. The functional element may be directly fastened to the housing 201 by using an adhesive, or may be indirectly fastened to the housing 201. The indirect fastening may be, for example, that the functional element is first fastened to the bearing substrate or bearing support by using an adhesive, and then fastened to the housing, or may be fastened in another form. It may be understood that, in an actual product, in addition to a part visible in FIG. 3, the connection part 203 formed by the adhesive includes a part that is not shown in FIG. 3 and that is not visible between the functional element and the housing.

It should be noted that in this application, "-" represents a value range, including two endpoint values. For example, "50%-90%" includes two endpoint values 50% and 90% and all values between the two endpoint values.

Embodiments of this application are further described below by using a plurality of embodiments.

### Embodiment 1

### Preparation of a low-molecular-weight polyurethane acrylate A (weight-average molecular weight 1344):

Put a 100 ppm catalyst (relative to 1gAOI) and a 200 ppm antioxidant (relative to 1gAOI) into a beaker, and then add polycarbonate diol (synthesized by using 2-methyl-2,4-pentadiol (MPD), 1,6-hexylene glycol (1,6-HD), and diethyl carbonate (DEC) as raw materials, a number-average molecular weight Mn=557, and a weight-average molecular weight Mw=1293) into the beaker. After a temperature rises to 80°C, add dropwise an isocyanate ethyl acrylate (AOI) monomer to the polycarbonate diol until a chemical measurement ratio of a hydroxy group to an isocyanate group is 1.05-1.2:1. After 4-12 hours of mixing and reacting, prepare the low-molecular-weight polyurethane acrylate A (polyurethane A for short), where a weight-average molecular weight Mw of the obtained polyurethane A is 1344, a number-average molecular weight Mn is 683, viscosity is 3600, and a PDI (polymer dispersity index, polymer dispersity index) is 1.97.

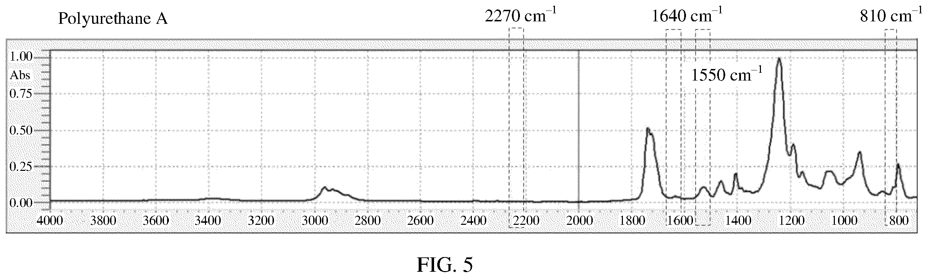

FIG. 5 is a representation diagram of an infrared spectrum of the polyurethane A prepared according to Embodiment 1 of this application. It can be learned from FIG. 5 that there is no peak at a characteristic peak location 2270 cm⁻¹ of the isocyanate group-NCO, indicating that isocyanate group reaction is complete. In addition, there are obvious peaks at C=C characteristic peak locations 1640 cm⁻¹ and 810 cm⁻¹, and at an N-H characteristic peak location 1550 cm⁻¹, indicating that C=C and N-H exist in a molecular structure of the polyurethane A.

### Embodiment 2

### Preparation of a low-molecular-weight polyurethane acrylate B (weight-average molecular weight 2503):

Put a 100 ppm catalyst (relative to 1gAOI) and a 200 ppm antioxidant (relative to 1gAOI) into a beaker, and then add polycarbonate diol (synthesized by using 2-methyl-2,4-pentadiol (MPD), 1,6-hexylene glycol (1,6-HD), and diethyl carbonate (DEC) as raw materials, a number-average molecular weight Mn=1083, and a weight-average molecular weight Mw=2313) into the beaker. After a temperature rises to 80°C, add dropwise an isocyanate ethyl acrylate (AOI) monomer to a polyol until a chemical measurement ratio of a hydroxy group to an isocyanate group is 1.05-1.2:1. After 4-12 hours of mixing and reacting, prepare the low-molecular-weight polyurethane acrylate B (polyurethane B for short), where a weight-average molecular weight Mw of the obtained polyurethane B is 2503, a number-average molecular weight Mn is 1340, viscosity is 27840, and a PDI is 1.87.

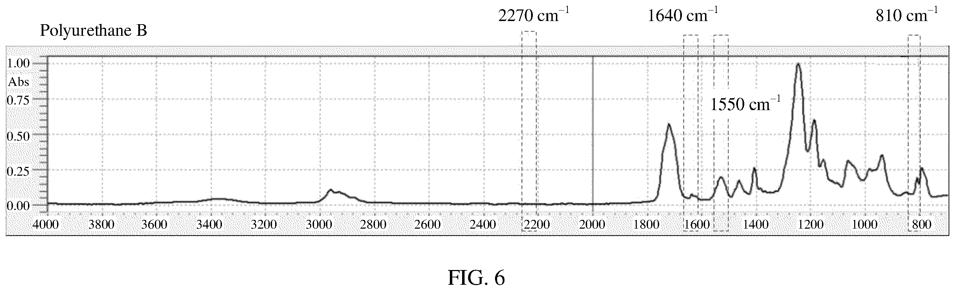

FIG. 6 is a representation diagram of an infrared spectrum of the polyurethane B prepared according to Embodiment 2 of this application. It can be learned from FIG. 6 that there is no peak at a characteristic peak location 2270 cm⁻¹ of the isocyanate group-NCO, indicating that isocyanate group reaction is complete. In addition, there are obvious peaks at C=C characteristic peak locations 1640 cm⁻¹ and 810 cm⁻¹, and at an N-H characteristic peak location 1550 cm⁻¹, indicating that C=C and N-H exist in a molecular structure of the polyurethane B.

### Embodiment 3

### Preparation of a low-molecular-weight polyurethane acrylate C (weight-average molecular weight 1338):

Put a 100 ppm catalyst (relative to 1gAOI) and a 200 ppm antioxidant (relative to 1gAOI) into a beaker, and then add polycarbonate diol (synthesized using by 2-methyl-2,4-pentadiol (MPD) and terephthalic acid as raw materials, a number-average molecular weight Mn=641, and a weight-average molecular weight Mw=1051) into the beaker. After a temperature rises to 80°C, add dropwise an isocyanate ethyl acrylate (AOI) monomer to a polyol until a chemical measurement ratio of a hydroxy group to an isocyanate group is 1.05-1.2:1. After 4-12 hours of mixing and reacting, preparethe low-molecular-weight polyurethane acrylate C (polyurethane C for short), where a weight-average molecular weight Mw of the obtained polyurethane C is 1338, a number-average molecular weight Mn is 936, viscosity is 80610, and a PDI is 1.43.

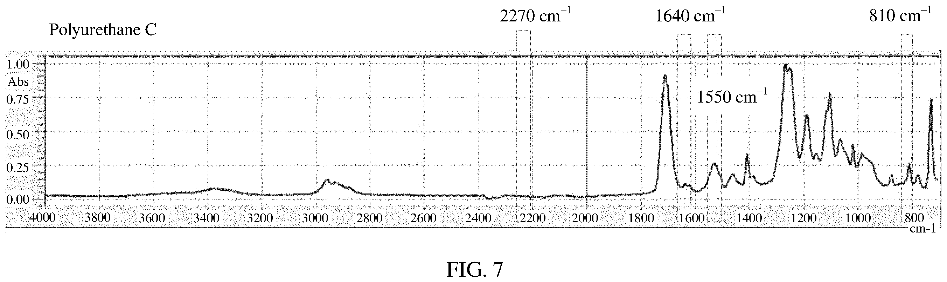

FIG. 7 is a representation diagram of an infrared spectrum of the polyurethane C prepared according to Embodiment 3 of this application. It can be learned from FIG. 7 that there is no peak at a characteristic peak location 2270 cm⁻¹ of the isocyanate group-NCO, indicating that isocyanate group reaction is complete. In addition, there are obvious peaks at C=C characteristic peak locations 1640 cm⁻¹ and 810 cm⁻¹ and at an N-H characteristic peak location 1550 cm⁻¹, indicating that C=C and N-H exist in a molecular structure of the polyurethane C.

### Embodiment 4

### Preparation of a low-molecular-weight polyurethane acrylate D (weight-average molecular weight 560):

Put a 100 ppm catalyst (relative to 1gAOI) and a 200 ppm antioxidant (relative to 1gAOI) into a beaker, and then add a polytetramethylene ether glycol (PTMEG, a number-average molecular weight Mn=340, and a weight-average molecular weight Mw=425) into the beaker. After a temperature rises to 80°C, add dropwise an isocyanate ethyl acrylate (AOI) monomer to a polyol until a chemical measurement ratio of a hydroxy group to an isocyanate group is 1.05-1.2: 1. After 4-12 hours of mixing and reacting, prepare the low-molecular-weight polyurethane acrylate D (polyurethane D for short), where a weight-average molecular weight Mw of the obtained polyurethane D is 560, a number-average molecular weight Mn is 445, viscosity is 7800, and a PDI is 1.26.

### Embodiment 5

### Preparation of a low-molecular-weight polyurethane acrylate E (weight-average molecular weight 4860):

Put a 100 ppm catalyst (relative to 1gAOI) and a 200 ppm antioxidant (relative to 1gAOI) in a beaker, and then add polycaprolactone glycol (PCL, a number-average molecular weight Mn=3340, a weight-average molecular weight Mw=4560) into the beaker. After a temperature rises to 80°C, add dropwise an isocyanate ethyl acrylate (AOI) monomer to a polyol until a chemical measurement ratio of a hydroxy group to an isocyanate group is 1.05-1.2: 1. After 4-12 hours of mixing and reacting, prepare the low-molecular-weight polyurethane acrylate E (polyurethane E for short), where a weight-average molecular weight Mw of the obtained polyurethane E is 4860, a number-average molecular weight Mn is 3578, viscosity is 56000, and a PDI is 1.36.

Parameters in Embodiments 1-5 are listed in Table 1.

**Table 1 Parameter summary table of Embodiments 1-5**

| Embodiment | Polyol type | Isocyanate acrylate | Viscosity (centipoise cp) | Number-average molecular weight Mn | Weight-average molecular weight Mw | PDI |
|---|---|---|---|---|---|---|
| Embodiment 1 Polyurethane A | Polycarbonate diol (MPD/1,6-HD/DEC, Mn=557, Mw=1293) | AOI | 3600 | 683 | 1344 | 1.97 |
| Embodiment 2 Polyurethane B | Polycarbonate diol (MPD/1,6-HD/DEC, Mn=1083, Mw=2313) | AOI | 27840 | 1340 | 2503 | 1.87 |
| Embodiment 3 Polyurethane C | Polyester diol (MPD/Terephthalic acid, Mn=641, Mw=1051) | AOI | 80610 | 936 | 1338 | 1.43 |
| Embodiment 4 Polyurethane D | Polytetramethylene ether glycol (PTMG, Mn=340, Mw=425) | AOI | 7800 | 445 | 560 | 1.26 |
| Embodiment 5 Polyurethane E | Polycaprolactone glycol (PCL, Mn=3340, Mw=4560) | AOI | 56000 | 3578 | 4860 | 1.36 |

It can be learned from Table 1 that, in Embodiment 1 to Embodiment 5 of this application, a polyurethane acrylate with a low molecular weight, suitable viscosity, and narrow molecular weight distribution is prepared by using a polyol and an isocyanate ethyl acrylate based on a one-step method, and a process is simple and efficient, so that industrial production can be implemented.

### Embodiment 6

### Preparation of a resin composition 1 (the polyurethane A is selected):

The low-molecular-weight polyurethane A synthesized in the foregoing embodiment, a UV moisture curing monomer (a molecular weight is 600) in the formula (1), a photoinitiator A (α-hydroxy ketone), a photoinitiator B (acylphosphine oxide), and a thiol A (pentaerythritol tetrakis(3-mercaptobutyric acid) ester) are mixed at a mass ratio 80:20:0.5:0.5:0.5, and then defoamed after being loaded into a rubber tube, to obtain the resin composition 1, that is, to obtain a low volatile adhesive.

A proportion of a non-volatile component before the resin composition 1 is cured is 99.36%; a proportion of the non-volatile component after the resin composition 1 is cured is 98.70%; and a shear strength is 1.25 Mpa.

### Embodiment 7

### Preparation of a resin composition 2 (the polyurethane A is selected):

The low-molecular-weight polyurethane A synthesized in the foregoing embodiment, a UV moisture curing monomer (a molecular weight is approximately 520) in the formula (2), the photoinitiator A (α-hydroxy ketone), the photoinitiator B (acylphosphine oxide), and the thiol A (pentaerythritol tetrakis(3-mercaptobutyric acid) ester) are mixed at a mass ratio 80:20:0.5:0.5:0.5, and then defoamed after being loaded into the rubber tube, to obtain the resin composition 2, that is, to obtain a low volatile adhesive.

A proportion of a non-volatile component before the resin composition 2 is cured is 99.20%; a proportion of the non-volatile component after the resin composition 2 is cured is 98.50%; and a shear strength is 1.21 Mpa.

### Embodiment 8

### Preparation of a resin composition 3 (two polyurethane acrylates of the polyurethane A and the polyurethane B are selected for mixing):

The low-molecular-weight polyurethane A and polyurethane B synthesized in the foregoing embodiment, the UV moisture curing monomer (the molecular weight 600) in the formula (1), the photoinitiator A (α-hydroxy ketone), the photoinitiator B (acylphosphine oxide), and the thiol A (pentaerythritol tetrakis(3-mercaptobutyric acid) ester) are mixed at a mass ratio 40:40:20:0.5:0.5:0.5, and then defoamed after being loaded into the rubber tube, to obtain the resin composition 3, that is, to obtain a low volatile adhesive.

A proportion of a non-volatile component before the resin composition 3 is cured is 99.45%; a proportion of the non-volatile component after the resin composition 3 is cured is 99.29%; and a shear strength is 1.23 Mpa.

### Embodiment 9

### Preparation of a resin composition 4 (without adding a thiol):

The low-molecular-weight polyurethane A synthesized in the foregoing embodiment, the UV moisture curing monomer (the molecular weight is 600) in the formula (1), the photoinitiator A (α-hydroxy ketone), and the photoinitiator B (acylphosphine oxide) are mixed at a mass ratio 80:20:0.5:0.5, and then defoamed after being loaded into the rubber tube, to obtain the resin composition 4, that is, to obtain a low volatile adhesive.

A proportion of a non-volatile component before the resin composition 4 is cured is 99.17%; a proportion of the non-volatile component after the resin composition 4 is cured is 98.93%; and a shear strength is 1.19 Mpa.

### Embodiment 10

### Preparation of a resin composition 5 (addition of the thiol is doubled compared with that of the composition 1):

The low-molecular-weight polyurethane A synthesized in the foregoing embodiment, the UV moisture curing monomer (the molecular weight is 600) in the formula (1), the photoinitiator A (α-hydroxy ketone), the photoinitiator B (acylphosphine oxide), and the thiol A (pentaerythritol tetrakis(3-mercaptobutyric acid) ester) are mixed at a mass ratio 80:20:0.5:0.5, and then defoamed after being loaded into the rubber tube, to obtain the resin composition 5, that is, to obtain a low volatile adhesive.

A proportion of a non-volatile component before the resin composition 5 is cured is 99.40%; a proportion of the non-volatile component after the resin composition 5 is cured is 98.82%; and a shear strength is 1.35 Mpa.

### Embodiment 11

### Preparation of a resin composition 6 (the polyurethane C is selected):

The low-molecular-weight polyurethane C synthesized in the foregoing embodiment, the UV moisture curing monomer (the molecular weight is 600) in the formula (1), the photoinitiator A (α-hydroxy ketone), the photoinitiator B (acylphosphine oxide), and the thiol A (pentaerythritol tetrakis(3-mercaptobutyric acid) ester) are mixed at a mass ratio 80:20:0.5:0.5:0.5, and then defoamed after being loaded into the rubber tube, to obtain the resin composition 6, that is, to obtain a low volatile adhesive.

A proportion of a non-volatile component before the resin composition 6 is cured is 99.65%; a proportion of the non-volatile component after the resin composition 6 is cured is 99.48%; and a shear strength is 1.05 Mpa.

### Embodiment 12

### Preparation of a resin composition 7 (the polyurethane D is selected):

The low-molecular-weight polyurethane D synthesized in the foregoing embodiment, the UV moisture curing monomer (the molecular weight is 600) in the formula (1), the photoinitiator A (α-hydroxy ketone), the photoinitiator B (acylphosphine oxide), and the thiol A (pentaerythritol tetrakis(3-mercaptobutyric acid) ester) are mixed at a mass ratio 80:20:0.5:0.5:0.5, and then defoamed after being loaded into the rubber tube, to obtain the resin composition 7, that is, to obtain a low volatile adhesive.

A proportion of a non-volatile component before the resin composition 7 is cured is 99.10%; a proportion of the non-volatile component after the resin composition 7 is cured is 98.90%; and a shear strength is 1.05 Mpa.

### Embodiment 13

### Preparation of a resin composition 8 (the polyurethane E is selected):

The low-molecular-weight polyurethane D synthesized in the foregoing embodiment, the UV moisture curing monomer (the molecular weight is 600) in the formula (1), the photoinitiator A (α-hydroxy ketone), the photoinitiator B (acylphosphine oxide), and the thiol A (pentaerythritol tetrakis(3-mercaptobutyric acid) ester) are mixed at a mass ratio 80:20:0.5:0.5:0.5, and then defoamed after being loaded into the rubber tube, to obtain the resin composition 8, that is, to obtain a low volatile adhesive.

A proportion of a non-volatile component before the resin composition 8 is cured is 99.61%; a proportion of the non-volatile component after the resin composition 8 is cured is 98.48%; and a shear strength is 1.2 Mpa.

### Embodiment 14

### Preparation of a resin composition 9 (two polyurethane acrylates of the polyurethane A and the polyurethane C are selected for mixing):

The low-molecular-weight polyurethane A and polyurethane C synthesized in the foregoing embodiment, the UV moisture curing monomer (the molecular weight is 600) in the formula (1), the photoinitiator A (α-hydroxy ketone), the photoinitiator B (acylphosphine oxide), and the thiol A (pentaerythritol tetrakis(3-mercaptobutyric acid) ester) are mixed at a mass ratio 40:40:20:0.5:0.5:0.5, and then defoamed after being loaded into the rubber tube, to obtain the resin composition 9, that is, to obtain a low volatile adhesive.

A proportion of a non-volatile component before the resin composition 9 is cured is 99.49%; a proportion of the non-volatile component after the resin composition 9 is cured is 99.14%; and a shear strength is 1.63 Mpa.

### Embodiment 15

### Preparation of a resin composition 10:

The low-molecular-weight polyurethane A and polyurethane C synthesized in the foregoing embodiment, the UV moisture curing monomer (the molecular weight is 600) in the formula (1), the photoinitiator A (α-hydroxy ketone), the photoinitiator B (acylphosphine oxide), and the thiol A (pentaerythritol tetrakis(3-mercaptobutyric acid) ester) are mixed at a mass ratio 40:40:20:0.5:0.5: 1, and then defoamed after being loaded into the rubber tube, to obtain the resin composition 10, that is, to obtain a low volatile adhesive.

A proportion of a non-volatile component before the resin composition 10 is cured is 99.30%; a proportion of the non-volatile component after the resin composition 10 is cured is 99.62%; and a shear strength is 1.98 Mpa.

### Embodiment 16

### Preparation of a resin composition 11:

The low-molecular-weight polyurethane A and polyurethane C synthesized in the foregoing embodiment, the UV moisture curing monomer (the molecular weight is 600) in the formular (1), the photoinitiator A (α-hydroxy ketone), the photoinitiator B (acylphosphine oxide), and a thiol B (pentaerythritol tetrakis(3-mercaptopropionic acid) ester) are mixed at a mass ratio 40:40:20:0.5:0.5:0.5, and then defoamed after being loaded into the rubber tube, to obtain the resin composition 11, that is, to obtain a low volatile adhesive.

A proportion of a non-volatile component before the resin composition 11 is cured is 99.60%; a proportion of the non-volatile component after the resin composition 11 is cured is 99.19%; and a shear strength is 2.18 Mpa.

### Embodiment 17

### Preparation of a resin composition 12:

The low-molecular-weight polyurethane A and polyurethane C synthesized in the foregoing embodiment, the UV moisture curing monomer (the molecular weight is 600), the photoinitiator A (α-hydroxy ketone), the photoinitiator B (acylphosphine oxide), and the thiol B (pentaerythritol tetrakis(3-mercaptopropionic acid) ester) are mixed at a mass ratio 40:40:20:0.5:0.5: 1, and then defoamed after being loaded into the rubber tube, to obtain the resin composition 12, that is, to obtain a low volatile adhesive.

A proportion of a non-volatile component before the resin composition 12 is cured is 99.53%; a proportion of the non-volatile component after the resin composition 12 is cured is 98.96%; and a shear strength is 2.34 Mpa.

### Embodiment 18

### Preparation of a resin composition 13:

The low-molecular-weight polyurethane A synthesized in the foregoing embodiment, the UV moisture curing monomer (the molecular weight is 600) in the formula (1), the photoinitiator A (α-hydroxy ketone), the photoinitiator B (acylphosphine oxide), and the thiol A (pentaerythritol tetrakis(3-mercaptobutyric acid) ester) are mixed at a mass ratio 180:20:0.5:0.5:0.5, and then defoamed after being loaded into the rubber tube, to obtain the resin composition 13, that is, to obtain a low volatile adhesive.

A proportion of a non-volatile component before the resin composition 13 is cured is 99.18%; a proportion of the non-volatile component after the resin composition 13 is cured is 99.50%; and a shear strength is 1.17 Mpa.

### Embodiment 19

### Preparation of a resin composition 14:

The low-molecular-weight polyurethane A synthesized in the foregoing embodiment, the UV moisture curing monomer (the molecular weight is 600) in the formula (1), the photoinitiator A (α-hydroxy ketone), the photoinitiator B (acylphosphine oxide), and the thiol A (pentaerythritol tetrakis(3-mercaptobutyric acid) ester) are mixed at a mass ratio 50:40:0.5:0.5:0.5, and then defoamed after being loaded into the rubber tube, to obtain the resin composition 14, that is, to obtain a low volatile adhesive.

A proportion of a non-volatile component before the resin composition 14 is cured is 99.40%; a proportion of the non-volatile component after the resin composition 14 is cured is 99.05%; and a shear strength is 1.06 Mpa.

### Comparative example 1

The low-molecular-weight polyurethane A synthesized in Embodiment 1 of this application, an isobornyl acrylate (IBOA, a UV curing monomer with a molecular weight 208), the photoinitiator A (α-hydroxy ketone), and the photoinitiator B (acylphosphine oxide) are mixed at a mass ratio 80:20:0.5:0.5, and then defoamed after being loaded into the rubber tube, to obtain a resin composition of the comparative example 1.

### Comparative example 2

Put a 100 ppm catalyst (relative to 1g IPDI) into a beaker, and then add polyester diol (synthesized by an adipic acid (AA) and 2-methyl-2,4-pentadiol (MPD) as raw materials, a number-average molecular weight Mn=1890, and a weight-average molecular weight Mw=2850) and an isobornyl acrylate (IBOA) monomer into the beaker and perform dilution. After a temperature rises to 80°C, add dropwise isofolone diisocyanate (IPDI) to a polyol until a chemical measurement ratio of a hydroxy group to an isocyanate group is 1: 1.2-1.4. After 4-12 hours of mixing and reacting, a high-molecular-weight polyurethane acrylate F (polyurethane F for short) is prepared, through end-capping, by adding a hydroxyethyl acrylate (HEA), and a weight-average molecular weight Mw of the polyurethane F is 34000, a number-average molecular weight Mn is 17282, viscosity is 25000, and aPDIis 1.97. The prepared polyurethane acrylate F with the weight-average molecular weight 34000, the isobornyl acrylate (IBOA, a UV curing monomer with a molecular weight 208), the photoinitiator A (α-hydroxy ketone), and the photoinitiator B (acylphosphine oxide) are mixed at a mass ratio 52:48:0.5:0.5, and then defoamed after being loaded into the rubber tube, to obtain a resin composition of the comparative example 2.

In this application, refer to FIG. 4. A method for testing a shear strength is as follows: a standard glass sample with a size 100 mm×25.4 mm×2.5 mm and a polybutylene terephthalate (PBT) sample are used, the glass sample and the PBT sample are bonded by using adhesive samples in this application, and a bonding surface is 12.7 mm×25.4 mm; a spacer of 0.12 mm is used to control a thickness of an adhesive layer, and the sample is cleaned by using an anhydrous ethanol before bonding; and 365 nm UV light of 6000 mj/cm² is used to perform a universal tensile machine test, stretching is performed along a length direction of the sample, and a test speed is 10 mm/min. In addition, in the embodiment and the comparative example, the mass proportion of the non-volatile component before and after the resin composition is light cured is determined according to a method of the GB/T 2793-1995 "Measurement of Non-volatile Substance Content of Adhesive". A specific test temperature is 150°C and test duration is 30 min.

Data values of Embodiments 6-12 are listed in Table 2, and data values of Embodiments 13-19 and the comparative examples are listed in Table 3.

**Table 2 Summary table of experimental data of Embodiments 6-12**

| Mass fraction of components/ representation parameter | Resin compositi on 1 | Resin composi tion 2 | Resin composi tion 3 | Resin composi tion 4 | Resin composi tion 5 | Resin composi tion 6 | Resin composi tion 7 |
|---|---|---|---|---|---|---|---|
| Polyurethane A | 80 | 80 | 40 | 80 | 80 | - | - |
| Polyurethane B | - | - | 40 | - | - | - | - |
| Polyurethane C | - | - | - | - | - | 80 | - |
| Polyurethane D | - | - | - | - | - | - | 80 |
| Polyurethane E | - | - | - | - | - | - | - |
| Polyurethane F | - | - | - | - | - | - | - |
| Curing monomer molecular weight | 600 | 520 | 600 | 600 | 600 | 600 | 600 |
| Curing monomer | 20 | 20 | 20 | 20 | 20 | 20 | 20 |
| Photoinitiator A | 0.5 | 0.5 | 0.5 | 0.5 | 0.5 | 0.5 | 0.5 |
| Photoinitiator B | 0.5 | 0.5 | 0.5 | 0.5 | 0.5 | 0.5 | 0.5 |
| Thiol A | 0.5 | 0.5 | 0.5 | - | 1 | 0.5 | 0.5 |
| Thiol B | - | - | - | - | - | - | - |
| Viscosity (cp) | 5259 | 5323 | 5459 | 4619 | 4020 | 54500 | 12000 |
| Mass proportion % of a non-volatile component before curing is performed | 99.36 | 99.20 | 99.45 | 99.17 | 99.40 | 99.65 | 99.10 |
| Mass proportion % of a non-volatile component after curing is performed | 98.70 | 98.50 | 99.29 | 98.93 | 98.82 | 99.48 | 98.90 |
| Shear strength (Mpa) | 1.25 | 1.21 | 1.23 | 1.19 | 1.35 | 1.05 | 1.05 |

**Table 3 Summary table of experimental data of Embodiments 13-19**

| Mass fraction of components/rep resentation parameter | Resin compo sition 8 | Resin compo sition 9 | Resin compo sition 10 | Resin compo sition 11 | Resin compo sition 12 | Resin compo sition 13 | Resin compo sition 14 | Compar ative example 1 | Compar ative example 2 |
|---|---|---|---|---|---|---|---|---|---|
| Polyurethane A | - | 40 | 40 | 40 | 40 | 180 | 50 | 80 | - |
| Polyurethane B | - | - | - | - | - | - | - | - | - |
| Polyurethane C | - | 40 | 40 | 40 | 40 | - | - | - | - |
| Polyurethane D | - | - | - | - | - | - | - | - | - |
| Polyurethane E | 80 | - | - | - | - | - | - | - | - |
| Polyurethane F | - | - | - | - | - | - | - | - | 52 |
| Curing monomer molecular weight | 600 | 600 | 600 | 600 | 600 | 600 | 600 | 208 | 208 |
| Curing monomer | 20 | 20 | 20 | 20 | 20 | 20 | 40 | 20 | 48 |
| Photoinitiator A | 0.5 | 0.5 | 0.5 | 0.5 | 0.5 | 0.5 | 0.5 | 0.5 | 0.5 |
| Photoinitiator B | 0.5 | 0.5 | 0.5 | 0.5 | 0.5 | 0.5 | 0.5 | 0.5 | 0.5 |
| Thiol A | 0.5 | 0.5 | 1 | - | - | 0.5 | 0.5 | - | - |
| Thiol B | - | - | - | 0.5 | 1 | - | - | - | - |
| Viscosity | 23400 | 20400 | 9659 | 8639 | 7739 | 5579 | 5039 | 2640 | 57470 |
| Mass proportion % of a non-volatile component before curing is performed | 99.61 | 99.49 | 99.30 | 99.60 | 99.53 | 99.18 | 99.40 | 74.31 | 67.11 |
| Mass proportion % of a non-volatile component after curing is performed | 99.48 | 99.14 | 99.62 | 99.19 | 98.96 | 99.50 | 99.05 | 96.70 | 91.99 |
| Shear strength (Mpa) | 1.2 | 1.63 | 1.98 | 2.18 | 2.34 | 1.17 | 1.06 | 1.33 | 2.19 |

It can be learned from the results of Table 2 and Table 3 that, in embodiments of this application, mass proportions of non-volatile components before and after the resin composition is cured are higher than mass proportions of non-volatile components before and after the resin composition in the comparative examples is cured, and are specifically higher than 98.5%. This indicates that VOC content is low before and after the resin composition is cured in embodiments of this application, and an allergy risk is low. Therefore, when the resin composition in embodiments of this application is used in a wearable device such as a headset, a human allergy risk can be reduced, which improves product competitiveness and user experience. It can be further learned from the results in Table 2 and Table 3 that the resin composition in embodiments of this application has a high shear strength, and the shear strength is greater than 1 MPa, so that good bonding effect can be obtained. The resin composition in embodiments of this application has good bonding effect, low VOC content, and a low allergy risk, and may be used for assembling and fastening an element of a wearable device. In addition, in comparison with the resin composition 1, the resin composition 4, and the resin composition 5, the addition of the thiol can improve curing performance of the resin composition and improve the shear strength. In comparison with the resin composition 9, the resin composition 10, the resin composition 11, and the resin composition 12, it can be seen that an increase in the addition of thiol to some extent helps improve curing performance. In comparison with the resin composition 9, the resin composition 10, the resin composition 11, and the resin composition 12, it can be further seen that the thiol B is more conducive to improving the resin curing performance than the thiol A, but the inventor finds that storage stability of the resin composition 11 and the resin composition 12 is lower than that of the resin composition 9 and the resin composition 10.

The resin composition 1, the resin composition 9, and the resin composition 10 obtained in embodiments are tested for hardness, elongation at break, and tensile strength after being cured, and measured results are listed in Table 4.

A Shore hardness measurement manner is as follows: make a resin composition into a 3 mm thick wafer, and use a Shore hardness meter to measure hardness. The elongation at break and tensile strength are as follows: the resin composition is prepared into a film with a thickness 0.2 mm and is measured according to ASTM D638, the elongation at break indicates a ratio of a displacement value of a sample to an original length when the sample is broken, and is represented by percentage (%); and the tensile strength represents a maximum resistance of a material to uniform plastic deformation.

The resin composition 1, the resin composition 9, and the resin composition 10 obtained in embodiments are measured in shear strength before and after curing is performed. The shear strength after curing is performed includes an initial shear strength after curing is performed by using 365 nm UV light of 6000 mj/cm², a shear strength after seven days (7×24 hours) at a room temperature after light curing is performed, and a shear strength after curing is performed at a pure moisture room temperature for two days (2×24 hours). The measured results are listed in Table 4.

**Table 4 Performance test results of resin compositions**

| Resin composition | Shore hardness | Elongation at break | Tensile strength (MPa) | Glass/PBT (shear strength MPa) | | |
|---|---|---|---|---|---|---|
| | | | | UV 365 nm 6000 mj/cm² | | Pure moisture room temperature for two days |
| | | | | Initial | After seven days at a room temperature | |
| Resin composition 1 | 45 | 136% | 10.9 | 1.25 | 1.62 | 2.1 |
| Resin composition 9 | 60 | 144% | 27.9 | 1.63 | 2.01 | 2.87 |
| Resin composition 10 | 65 | 148% | 15.0 | 1.98 | 2.34 | 2.5 |

It can be learned from the result in Table 4 that the resin composition in embodiments of this application can obtain features such as hardness, elongation at break, tensile strength, and shear strength that can meet requirements of a conventional adhesive product. It can also be learned from the result in Table 4 that the resin composition in embodiments of this application has a UV light/moisture double curing characteristic, and moisture curing can compensate for incomplete light curing.

A GC-MS (gas chromatograph-mass spectrometer) is used to measure content of a volatile substance before and after the resin composition is cured, a thermal weight loss method is used to measure content of a non-volatile substance before and after the resin composition is cured (a test temperature is 150°C/test duration is 30 min), and then the content of the non-volatile substance is converted into the content of the volatile substance. Measured results of the resin composition 1, the resin composition 9, the resin composition 10, and the resin composition 2 in embodiments of this application are listed in Table 5.

**Table 5 Measured results of content of volatile substances before and after resin compositions are cured**

| Test method | GB 33372-2020 | | | GB/T 2793-1995 | | | Odor after curing is performed |
|---|---|---|---|---|---|---|---|
| | Volatile organic compound limit of an adhesive | | | Measurement of content of a non-volatile substance of an adhesive | | | |
| Resin composition | VOC content (GC-MS) | | | Content of a volatile substance (150°C/30min) | | | |
| | Before curing (mg/g) | UV After curing (mg/g) | After pure moisture curing (mg/g) | Before curing (mg/g) | UV After curing (mg/g) | After pure moisture curing for two days at a room temperature (mg/g) | |
| Resin composition 1 | 18.9 | 10.1 | 17.7 | 6.4 | 13.0 | 8.4 | No odor |
| Resin composition 9 | 15.7 | 11.0 | 14.0 | 5.1 | 8.6 | 8.5 | No odor |
| Resin composition 10 | 17.6 | 14.8 | 17.3 | 7.0 | 3.8 | 8.5 | No odor |
| Comparative example 2 | 240.0 | 23.8 | 33.2 | 328.9 | 80.1 | 165.0 | Faint odor |

It can be learned from the measured result in Table 5 that, in embodiments of this application, content of a volatile substance before the resin composition is cured is far lower than content of a volatile substance before the resin composition is cured in the comparative example 2. In embodiments of this application, content of volatile substances after the resin composition is UV light cured and pure moisture cured is lower than content of volatile substances after the resin composition is UV light cured and pure moisture cured in the comparative example 2. In addition, because the content of the volatile substance after the resin composition in the comparative example 2 is cured is high and a faint odor is emitted, and the content of the volatile substance after the resin composition in embodiments of this application is cured is low and has no odor, user experience of a terminal product using the resin composition of embodiments of this application can be improved.

## Claims

1. A resin composition, wherein the resin composition comprises a polyurethane acrylate and a curing monomer, the curing monomer comprises a compound containing a free radical polymerizable group and/or a compound containing a moisture curable group, and a weight-average molecular weight of the curing monomer is greater than or equal to 300.

2. The resin composition according to claim 1, wherein the weight-average molecular weight of the curing monomer is greater than or equal to 500.

3. The resin composition according to claim 2, wherein the weight-average molecular weight of the curing monomer is 500-1000.

4. The resin composition according to any one of claims 1 to 3, wherein a weight-average molecular weight of the polyurethane acrylate is greater than or equal to 500 and less than or equal to 5000.

5. The resin composition according to any one of claims 1 to 4, wherein VOC content before and after the resin composition is cured is less than 20 mg/g.

6. The resin composition according to any one of claims 1 to 5, wherein weight content of a non-volatile substance before and after the resin composition is cured is greater than or equal to 98.5%.

7. The resin composition according to any one of claims 1 to 6, wherein in the resin composition, mass proportions of the polyurethane acrylate and the curing monomer are respectively 50%-90% and 10%-50%.

8. The resin composition according to any one of claims 1 to 7, wherein the resin composition further comprises a photoinitiator.

9. The resin composition according to claim 8, wherein in the resin composition, a mass proportion of the photoinitiator is 0.5%-5%.

10. The resin composition according to any one of claims 1 to 9, wherein the resin composition further comprises a thiol.

11. The resin composition according to claim 10, wherein in the resin composition, a mass proportion of the thiol is less than or equal to 3%.

12. The resin composition according to any one of claims 1 to 11, wherein the curing monomer comprises the compound containing the free radical polymerizable group and/or a compound containing an isocyanate-terminated group, or comprises the compound containing the free radical polymerizable group and/or a compound containing an alkoxysilyl group.

13. The resin composition according to any one of claims 1 to 12, wherein the curing monomer comprises a compound represented by the following formula (1): 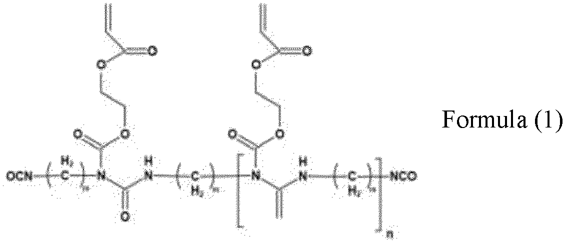 wherein in the formula (1), m and n are positive integers.

14. The resin composition according to any one of claims 1 to 12, wherein the curing monomer comprises a compound represented by the following formula (2):

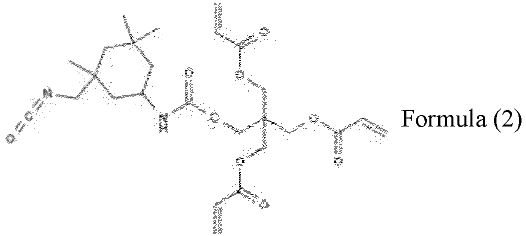

15. The resin composition according to claim 8 or 9, wherein the photoinitiator comprises one or more of an α-hydroxy ketone photoinitiator, an acylphosphine oxide photoinitiator, a benzyl formate photoinitiator, a benzil photoinitiator, a benzophenone photoinitiator, and an oxime ester photoinitiator.

16. The resin composition according to claim 10 or 11, wherein the thiol comprises one or more of pentaerythritol tetrakis(3-mercaptobutyric acid) ester, pentaerythritol tetrakis(3-mercaptopropionic acid) ester, tris[2-(3-mercaptopropionyloxy)ethyl] isocyanurate, and trimethylolpropane tris(3-mercaptopropionic acid ester).

17. The resin composition according to any one of claims 1 to 16, wherein the polyurethane acrylate is prepared in the following manner:
under a condition that a catalyst and an antioxidant exist, mixing a polyol and an isocyanate ethyl acrylate monomer, and mixing and reacting for 4-12 hours at 40-100°C, to obtain the polyurethane acrylate.

18. The resin composition according to any one of claims 1 to 17, wherein a shear strength of the resin composition is greater than or equal to 1 Mpa.

19. A method for preparing a resin composition, comprising the following steps:
mixing a polyurethane acrylate and a curing monomer to obtain the resin composition, wherein the curing monomer comprises a compound containing a free radical polymerizable group and/or a compound containing a moisture curable group, and a weight-average molecular weight of the curing monomer is greater than or equal to 300.

20. An adhesive, wherein the adhesive comprises the resin composition according to any one of claims 1 to 18.

21. A resin curing product, wherein the resin curing product is obtained by curing the resin composition according to any one of claims 1 to 18.

22. The resin curing product according to claim 21, wherein the curing comprises ultraviolet light curing and/or moisture curing.

23. A bonding structure, wherein the bonding structure comprises a first bonding member, a second bonding member, and a bonding part disposed between the first bonding member and the second bonding member, and the bonding part comprises a curing product obtained by curing the resin composition according to any one of claims 1 to 18.

24. A device, wherein the device uses the resin composition according to any one of claims 1 to 18, or comprises the bonding structure according to claim 23.

25. The device according to claim 24, wherein the device is a wearable device.

26. The resin composition according to any one of claims 1 to 18, wherein the resin composition is used in the electronic device.

27. The application according to claim 26, wherein the resin composition is used as an adhesive in the electronic device.

28. A wearable device, wherein the wearable device comprises a housing and an element fastened to the housing by using an adhesive, and the adhesive comprises the adhesive according to claim 20.
